(19) Europäisches Patentamt / European Patent Office / Office européen des brevets

(11) **EP 4 489 260 A1**

(12) **EUROPEAN PATENT APPLICATION**
published in accordance with Art. 153(4) EPC

(43) Date of publication:
08.01.2025 Bulletin 2025/02

(21) Application number: 22929961.5

(22) Date of filing: 20.12.2022

(51) International Patent Classification (IPC):
$H02J\ 7/04^{(2006.01)}$    $B60L\ 53/14^{(2019.01)}$
$B60L\ 53/62^{(2019.01)}$    $B60L\ 53/66^{(2019.01)}$
$B60L\ 58/12^{(2019.01)}$    $G01R\ 31/3828^{(2019.01)}$
$G01R\ 31/3835^{(2019.01)}$    $G01R\ 31/387^{(2019.01)}$
$G01R\ 31/389^{(2019.01)}$    $G01R\ 31/392^{(2019.01)}$
$H01M\ 10/44^{(2006.01)}$    $H01M\ 10/48^{(2006.01)}$

(52) Cooperative Patent Classification (CPC):
B60L 53/14; B60L 53/62; B60L 53/66; B60L 58/12;
G01R 31/3828; G01R 31/3835; G01R 31/387;
G01R 31/389; G01R 31/392; H01M 10/44;
H01M 10/48; H02J 7/04; Y02E 60/10

(86) International application number:
PCT/JP2022/046766

(87) International publication number:
WO 2023/166819 (07.09.2023 Gazette 2023/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.03.2022 JP 2022031417

(71) Applicant: Hitachi, Ltd.
Tokyo 100-8280 (JP)

(72) Inventors:
• NAKAO Ryohhei
Tokyo 100-8280 (JP)
• KAWAJI Jun
Tokyo 100-8280 (JP)
• MIYAZAKI Taizou
Tokyo 100-8280 (JP)

(74) Representative: Mewburn Ellis LLP
Aurora Building
Counterslip
Bristol BS1 6BX (GB)

(54) **CHARGING CONTROL SYSTEM, CHARGING CONTROL METHOD, AND PROGRAM**

(57) Provided is a charging control system and the like that appropriately calculate a battery parameter of a battery while suppressing an increase in a time required for charging the battery. A charging control system (100) includes: a charging control means which calculates a predetermined battery parameter of a battery (21) on the basis of a state quantity of the battery (21) when the battery (21) is intermittently charged, in which the charging control means performs next intermittent charging at a timing different from that of current intermittent charging, and this timing is set on the basis of a charging rate, a voltage, or an internal resistance of the battery (21) when charging is temporarily stopped in intermittent charging of the battery (21).

*FIG. 1*

EP 4 489 260 A1

## Description

Technical Field

The present invention relates to a charging control system and the like.

Background Art

In order to reduce the discharge amount of carbon dioxide, electrification using a battery has been promoted not only in an automobile but also in any moving object on water, land, and in the air (such as ships, railway vehicles on non-electrified lines, aircrafts, or flying objects) without limitation to manned or unmanned. As a charging control system that controls charging of such a battery, for example, a technique described in PTL 1 is known.

That is, PTL 1 describes that "when a terminal voltage of the secondary battery reaches a voltage determined beforehand during charging or when the charge capacity of the secondary battery reaches a predetermined capacity, the charging of the secondary battery is temporarily stopped, and after an open terminal voltage of the secondary battery is detected, the charging of the secondary battery is resumed and continued up to full charge".

Citation List

Patent Literature

PTL 1: JP 2011-43460 A

Summary of Invention

Technical Problem

The technique described in PTL 1 is based on the premise that the characteristics (for example, open terminal voltage) of the secondary battery are grasped in advance, and thus there is room for improvement in terms of versatility. In addition, in the technique described in PTL 1, since the secondary battery is intermittently charged, there is a possibility that the time required for charging becomes long.

In this regard, an object of the present invention is to provide a charging control system and the like that appropriately calculate a battery parameter of a battery while suppressing an increase in a time required for charging the battery.

Solution to Problem

In order to solve the above problem, the present invention includes: a charging control means which calculates a predetermined battery parameter of a battery on the basis of a state quantity of the battery when the battery is intermittently charged. The charging control means performs next intermittent charging at a timing different from that of current intermittent charging, and the timing is set on the basis of a charging rate, a voltage, or an internal resistance of the battery when charging is temporarily stopped in intermittent charging of the battery.

Advantageous Effects of Invention

According to the present invention, it is possible to provide a charging control system and the like that appropriately calculate a battery parameter of a battery while suppressing an increase in a time required for charging the battery.

Brief Description of Drawings

[FIG. 1] FIG. 1 is a configuration diagram including a charging control system according to a first embodiment.
[FIG. 2] FIG. 2 is a functional block diagram of a charging control means included in the charging control system according to the first embodiment.
[FIG. 3] FIG. 3 is a functional block diagram of a charging control unit included in the charging control means of the charging control system according to the first embodiment.
[FIG. 4] FIG. 4 is a time chart illustrating changes in current and voltage when charging of a battery is temporarily stopped in the charging control system according to the first embodiment.
[FIG. 5] FIG. 5 is an explanatory diagram of a voltage equivalent circuit model of a battery in the charging control system according to the first embodiment.
[FIG. 6A] FIG. 6A is an explanatory diagram illustrating a relationship between an SOC and an OCV when the battery is an NMC-C-based battery in the charging control system according to the first embodiment.
[FIG. 6B] FIG. 6B is an explanatory diagram illustrating the relationship between the SOC and the OCV when the battery is an LFP-C-based battery in the charging control system according to the first embodiment.
[FIG. 7] FIG. 7 is a time chart illustrating changes in current and voltage when charging of a battery is temporarily stopped in the charging control system according to the first embodiment.
[FIG. 8A] FIG. 8A is a flowchart of processing executed by the charging control means.
[FIG. 8B] FIG. 8B is a flowchart of the processing executed by the charging control means.
[FIG. 9] FIG. 9 is a time chart regarding first intermittent charging in the charging control system according to the first embodiment.

[FIG. 10] FIG. 10 is an explanatory diagram illustrating the relationship between the SOC and the OCV of the battery in the charging control system according to the first embodiment.

[FIG. 11] FIG. 11 is a time chart regarding second intermittent charging in the charging control system according to the first embodiment.

[FIG. 12A] FIG. 12A is an explanatory diagram illustrating a relationship between the SOC and a DCR when the battery is the NMC-C-based battery in the charging control system according to the first embodiment.

[FIG. 12B] FIG. 12B is an explanatory diagram illustrating the relationship between the SOC and the DCR when the battery is the LFP-C-based battery in the charging control system according to the first embodiment.

[FIG. 13] FIG. 13 is a time chart regarding first intermittent charging in a charging control system according to a second embodiment.

[FIG. 14] FIG. 14 is an explanatory diagram illustrating the relationship between the SOC and the DCR of the battery in the charging control system according to the second embodiment.

[FIG. 15] FIG. 15 is a time chart regarding second intermittent charging in the charging control system according to the second embodiment.

[FIG. 16] FIG. 16 is a configuration diagram including a charging control system according to a third embodiment.

[FIG. 17] FIG. 17 is a time chart illustrating a change in power used by each charger and a change in total power in the charging control system according to the third embodiment.

[FIG. 18] FIG. 18 is a time chart illustrating changes in voltages of three batteries in the charging control system according to the third embodiment.

[FIG. 19] FIG. 19 is a time chart illustrating changes in current and voltage of the battery when charging is continuously performed in a comparative example.

[FIG. 20] FIG. 20 is a time chart illustrating changes in current, voltage, and SOC of the battery when charging is intermittently performed in another comparative example.

[FIG. 21] FIG. 21 is a time chart illustrating a change in total power of a total of three chargers and a change in power used by each charger in another comparative example.

Description of Embodiments

<<First embodiment>>

<Configuration of charging control system>

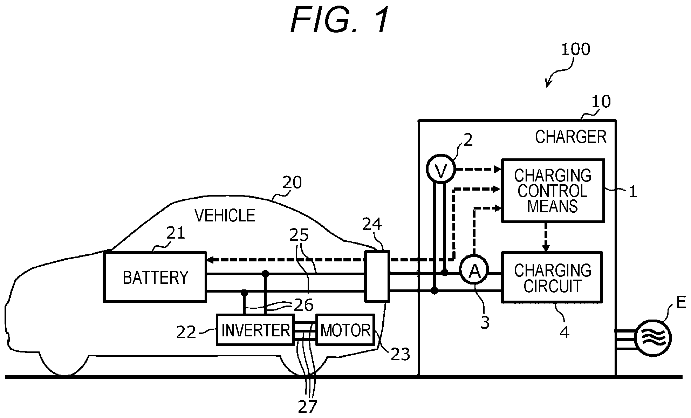

FIG. 1 is a configuration diagram including a charging control system 100 according to a first embodiment.

Note that, among lines connecting configurations in FIG. 1, a solid line indicates a power line, and a broken line indicates a signal line. The charging control system 100 is a system that controls charging of the battery 21 of a vehicle 20 (moving object). The charging control system 100 also has a function of estimating characteristics such as a deterioration rate (State of Health: SOH) of the battery 21. Hereinafter, prior to the description of the charging control system 100, a vehicle 20 as an example of a moving object including a railway, a ship, and the like will be briefly described.

The vehicle 20 is a moving object on land that travels by power from the battery 21 or the like. Examples of such a vehicle 20 include an electric vehicle and a plug-in hybrid vehicle. As illustrated in FIG. 1, the vehicle 20 includes a battery 21, an inverter 22, a motor 23, and an insertion port 24 of a charging plug (not illustrated). The battery 21 is a chargeable/dischargeable secondary battery. As illustrated in FIG. 1, the battery 21 is connected to the insertion port 24 via a wire 25, and is connected to the inverter 22 via the wire 25 (part) and a wire 26 sequentially.

The inverter 22 is a power converter that converts DC power into AC power. That is, the inverter 22 converts DC power supplied from the battery 21 into AC power, and outputs the converted AC power to the motor 23. The motor 23 is a drive source of the vehicle 20, and is connected to the inverter 22 via a three-phase wire 27. The insertion port 24 is a connection portion into which a charging plug (not illustrated) is inserted when the battery 21 is charged. By inserting the charging plug into the insertion port 24, the battery 21 and the charger 10 are electrically connected.

The charger 10 is a device that charges the battery 21. In addition, the charger 10 also has a function of estimating a deterioration rate or the like of the battery 21 on the basis of measurement values of current and voltage or a charging rate (State Of Charge: SOC) in the process of charging the battery 21. Note that, in the example of FIG. 1, the charging control system 100 includes the charger 10, but may further include one or more servers (not illustrated) capable of communicating with the charger 10.

As illustrated in FIG. 1, the charger 10 includes a charging control means 1, a voltage measurement means 2, a current measurement means 3, and a charging circuit 4, and is driven by power supplied from a commercial power supply E (three-phase AC power supply). The voltage measurement means 2 measures the voltage of the battery 21. The current measurement means 3 measures a charging current supplied from the charging circuit 4 to the battery 21. The charging circuit 4 generates a charging current in a predetermined manner on the basis of a current command from the charging control means 1.

Although not illustrated, the charging control means 1 includes, as a hardware configuration, electronic circuits such as a central processing unit (CPU), a read only memory (ROM), a random access memory (RAM), and various interfaces. Then, the program stored in the ROM is read and developed in the RAM, and the CPU executes various types of processing. The charging control means 1 generates a charging current command on the basis of the measurement values of the voltage measurement means 2 and the current measurement means 3 in addition to the charging current command value transmitted from the vehicle 20 to the charger 10, and outputs the generated current command to the charging circuit 4.

For example, when the vehicle 20 is managed by a predetermined operation management system (not illustrated), the operation management system side is required to grasp the remaining travelable distance of the vehicle 20 on the basis of the deterioration state of the battery 21 and the like and appropriately set the travel route of the vehicle 20. However, it is often difficult for the operation management system to acquire in advance characteristic data such as an open circuit voltage (OCV) and an internal resistance related to the deterioration state of the battery 21.

In this regard, in the first embodiment, the charging control means 1 calculates a predetermined "battery parameter" of the battery 21 on the basis of the "state quantity" of the battery 21 when the battery 21 of the vehicle 20 (moving object) is intermittently charged. The "state quantity" described above includes the voltage, the charging current, and the SOC of the battery 21. In addition, the "battery parameter" is, for example, the OCV or the internal resistance of the battery 21. The OCV of the battery 21 is a stable voltage at the time of no load in which no current flows (or almost no current flows) in the battery 21. The calculated battery parameter is used, for example, to calculate the state, the degree of deterioration, and the life of the battery (battery 21).

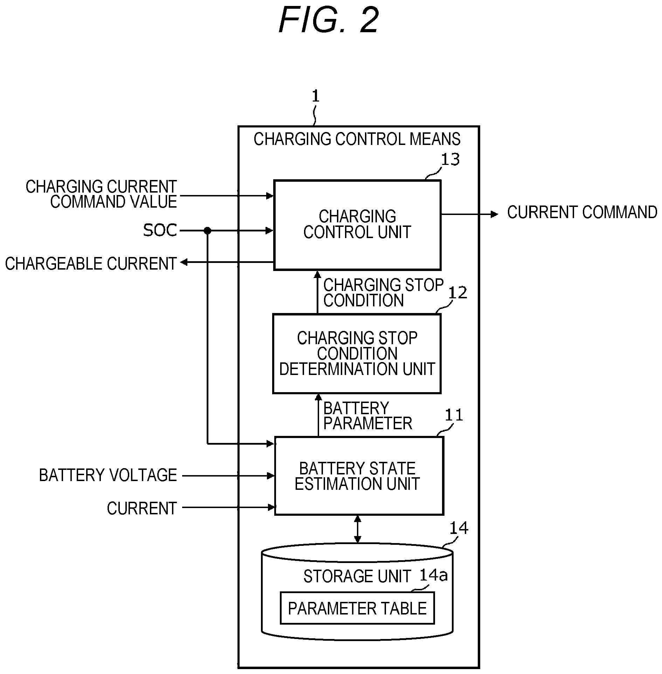

FIG. 2 is a functional block diagram of the charging control means 1.

As illustrated in FIG. 2, the charging control means 1 includes a battery state estimation unit 11, a charging stop condition determination unit 12, a charging control unit 13, and a storage unit 14.

The battery state estimation unit 11 calculates a predetermined battery parameter indicating a state (characteristic) of the battery 21. For example, the battery state estimation unit 11 intermittently charges the battery 21, and acquires, as the OCV, the voltage of the battery 21 when a predetermined time has elapsed since the charge was temporarily stopped. In addition, the battery state estimation unit 11 calculates the internal resistance of the battery 21 on the basis of the state quantity (voltage, charging current, and SOC) in the process of intermittently charging the battery 21.

The charging stop condition determination unit 12 determines a charging stop condition that is a condition for a temporary stop when the battery 21 is intermittently charged. Here, the "charging stop condition" is an SOC (or the voltage of the battery 21) serving as a threshold for temporarily stopping the charging of the battery 21. Then, each time the charging control unit 13 temporarily stops charging the battery 21, the battery state estimation unit 11 calculates battery parameters such as the OCV and the internal resistance corresponding to the SOC at that time.

The charging control unit 13 has a function of transmitting a value of a chargeable current, which is an upper limit value of the charging current of the battery 21, to the vehicle 20 (see FIG. 1). Note that on the vehicle 20 side, the charging current command value is reset as necessary such that the charging current command value becomes equal to or less than the chargeable current. The charging control unit 13 outputs a predetermined charging command to the charging circuit 4 (see FIG. 1) on the basis of the charging current command value transmitted from the vehicle 20 and the SOC of the battery 21.

The storage unit 14 stores a parameter table 14a. The parameter table 14a is a table in which battery parameters such as the OCV and the internal resistance of the battery 21 are stored in association with the identification information of the battery 21. As described above, the battery parameter is the OCV or the internal resistance of the battery 21, and is calculated by the battery state estimation unit 11.

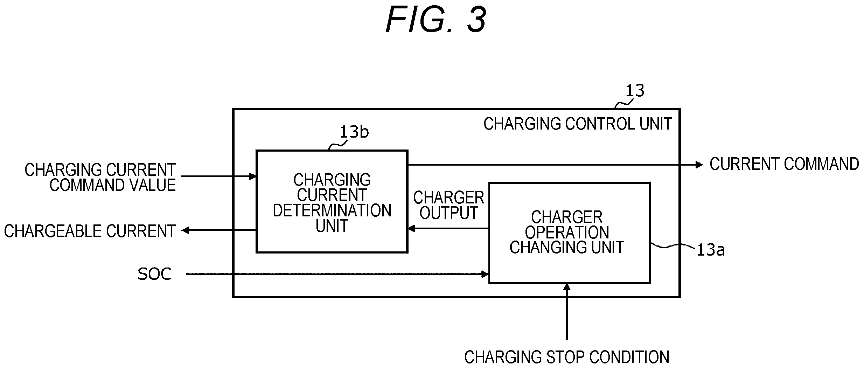

FIG. 3 is a functional block diagram of the charging control unit 13 included in the charging control means.

As illustrated in FIG. 3, the charging control unit 13 includes a charger operation changing unit 13a and a charging current determination unit 13b. The charger operation changing unit 13a switches the operation of the charger 10 (see FIG. 1) to a predetermined operation on the basis of the charging stop condition input from the charging stop condition determination unit 12 (see FIG. 2) and the SOC received from the vehicle 20 (see FIG. 1).

For example, when the SOC of the battery 21 (see FIG. 1) reaches the threshold defined in the charging stop condition, the charger operation changing unit 13a temporarily stops the charging of the battery 21 by lowering charger output from a predetermined value to 0 [kW]. The charger operation changing unit 13a outputs the value of the charger output based on the charging stop condition to the charging current determination unit 13b.

The charging current determination unit 13b determines the chargeable current in the charger 10 (see FIG. 1) on the basis of the value of the charger output input from the charger operation changing unit 13a. For example, the charging current determination unit 13b increases the chargeable current as the charger output increases. In addition, the charging current determination unit 13b sets the chargeable current to 0 [A] when the charger output is 0 [kW]. The value of the chargeable current determined in this manner is transmitted from the charging current determination unit 13b to the vehicle 20 (see FIG. 1). Note that the charging control unit 13 may output a predetermined signal to the charging circuit 4 (see FIG. 1) without particularly changing the chargeable current, thereby temporarily stopping the charging of the battery 21 (see FIG. 1) .

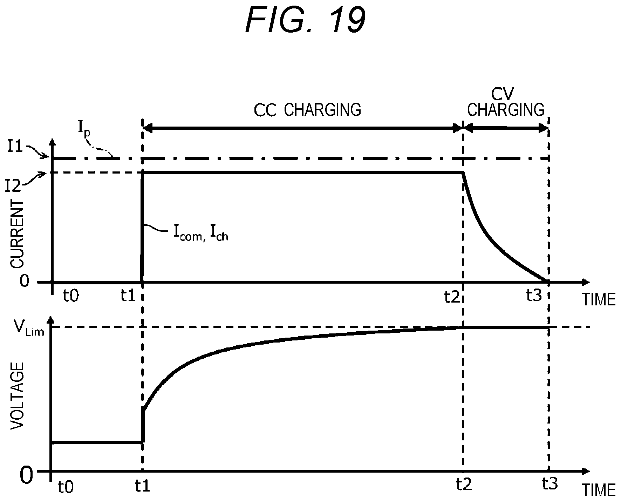

FIG. 19 is a time chart illustrating changes in current and voltage of the battery when charging is continuously performed in a comparative example.

Note that a horizontal axis in FIG. 19 represents a time. A vertical axis of FIG. 19 represents the current (charging current) flowing through the battery 21 and the voltage of the battery 21 in order from the top of the drawing. FIG. 19 illustrates waveforms of current and voltage when so-called constant current constant voltage charging (CCCV charging) is performed. In the CCCV charging, constant current (CC) charging is performed while maintaining the magnitude of the charging current at a predetermined level until the voltage of the battery 21 reaches an upper limit value $V_{Lim}$, and then constant voltage (CV) charging is performed while maintaining the voltage of the battery 21. Note that a charging mode to be performed when the battery 21 is charged is set in advance on the vehicle 20 side.

In the example of FIG. 19, in the CC charging period (time t1 to time t2), a value I2 of a charging current command value $I_{com}$ transmitted from the vehicle 20) is smaller than a value I1 of a chargeable current $I_p$ based on the output setting value (charger output: see FIG. 3) of the charger 10. Therefore, during CC charging, the charging current command value $I_{com}$ is set as a current command in the charger 10, and the charging current $I_{ch}$ based on this current command is supplied to the battery 21. Then, at time t2 when the voltage of the battery 21 reaches the upper limit value $V_{Lim}$, the CC charging is switched to the CV charging.

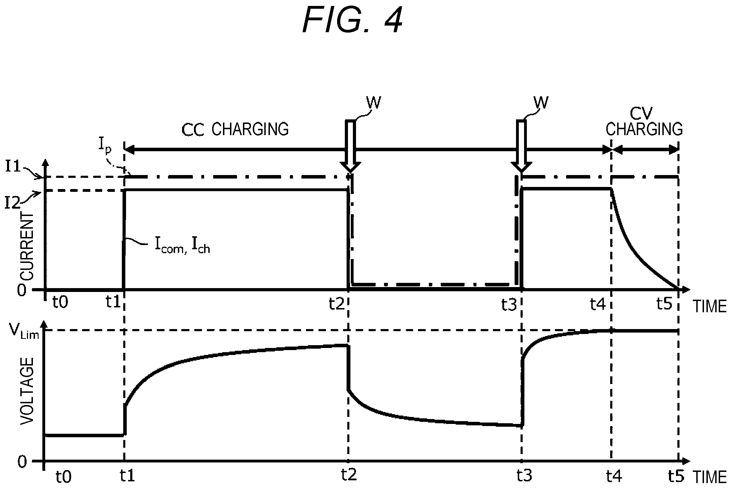

FIG. 4 is a time chart illustrating changes in current and voltage when the charging of the battery is temporarily stopped (see FIG. 1 as appropriate).

Note that a downward white arrow W illustrated in FIG. 4 indicates a timing at which the charger operation changing unit 13a (see FIG. 3) changes the operation of the charger 10. In the example of FIG. 4, from time t2 to time t3 in the middle of the CC charging, the chargeable current $I_p$ is set to 0, and the charging of the battery 21 is temporarily stopped. When charging is temporarily stopped in this manner, the voltage of the battery 21 rapidly decreases at time t2, and then gradually decreases until time t3 when charging is resumed. Although details will be described later, a measurement value such as a voltage when charging is temporarily stopped is used to calculate the OCV and the internal resistance of the battery 21.

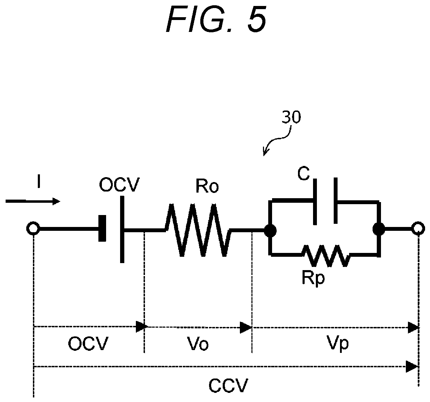

FIG. 5 is an explanatory diagram of a voltage equivalent circuit model 30 of the battery.

The voltage equivalent circuit model 30 illustrated in FIG. 5 is a model in which the internal resistance of the battery 21 is simulated by a resistor of an electric circuit, or the OCV of the battery 21 is simulated by a power supply voltage in order to reproduce a change in voltage of the battery 21 (see FIG. 1). Ro included in the voltage equivalent circuit model 30 is a resistance component that does not depend on the energization time in the internal resistance of the battery 21 (see FIG. 1). The resistance component Ro corresponds to a member resistance of an electrode of the battery 21, an electrolytic solution, or the like. On the other hand, the parallel circuit of Rp and C included in the voltage equivalent circuit model 30 is a resistance component that depends on the energization time in the internal resistance of the battery 21. The resistance component Rp corresponds to an internal resistance (polarization resistance) that causes a voltage change due to an electrochemical reaction inside the battery 21 or a voltage change due to diffusion of lithium ions.

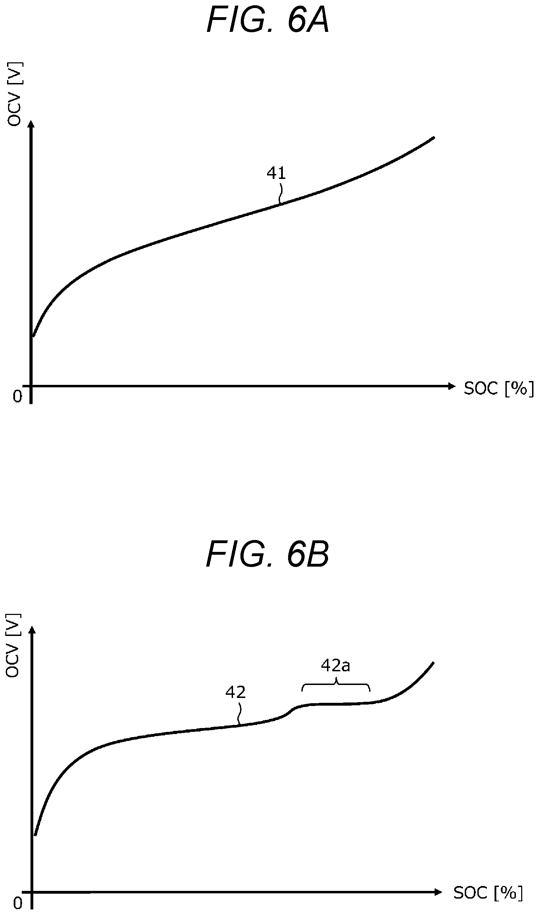

The OCV and the resistance components Ro and Rp of the battery 21 illustrated in FIG. 5 are battery parameters indicating the characteristics of the battery 21. These battery parameters have different values depending on the magnitude of the SOC of the battery 21. An example thereof will be described with reference to FIGS. 6A and 6B.

FIG. 6A is an explanatory diagram illustrating a relationship between the SOC and the OCV when the battery is an NMC-C-based battery.

Note that a horizontal axis in FIG. 6A represents the SOC of the battery 21 (see FIG. 1). A vertical axis in FIG. 6A is the OCV of the battery 21. The NMC-C-based battery described above is a ternary battery using lithium, nickel, and cobalt-manganese oxide as a positive electrode material. As illustrated in FIG. 6A, an OCV curve 41 when the battery 21 is the NMC-C-based battery is a monotonically increasing smooth curve, and as the SOC of the battery 21 increases, the OCV also increases.

FIG. 6B is an explanatory diagram illustrating a relationship between the SOC and the OCV when the battery is an LFP-C-based battery.

As illustrated in FIG. 6B, also when the battery 21 is the LFP-C-based battery (iron phosphate-based battery), the OCV increases as the SOC of the battery 21 increases, but the manner of change is different from that in the case of the NMC-C-based battery (see FIG. 6A). Specifically, there is a place 42a where the gradient (positive gradient) of the OCV curve 42 decreases while the SOC of the battery 21 increases. As described above, the shape of the OCV curve varies depending on the type of the battery 21. Note that in FIG. 6A (in the case of the NMC-C-based battery) and FIG. 6B (in the case of the LFP-C-based battery), the type of the battery 21 is not particularly limited.

Incidentally, even when the type of the battery 21 is the same, there are some individual differences, and the shape of the OCV curve or the value of the OCV at each SOC is often different depending on the progress of deterioration. In addition, it is often difficult for the operation management system (not illustrated) and the charging control system 100 of the vehicle 20 to acquire characteristics of the battery 21 such as the OCV curve in advance. In this regard, in the first embodiment, the charging control means 1 calculates the OCV and the internal resistance of the battery 21 on the basis of the state quantity (the voltage of the battery 21, the charging current, and the SOC) in the process of intermittently charging the battery 21. That is, the OCV curves 41 and 42 illustrated in FIGS. 6A and 6B are not known, and are estimated by the charging control means 1.

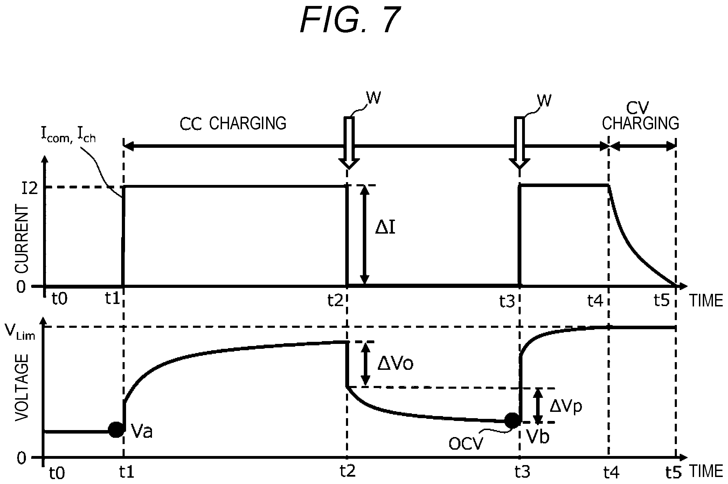

FIG. 7 is a time chart illustrating changes in current and voltage when the charging of the battery is temporarily stopped.

Note that the manner of changing the charging current command value $I_{com}$, the charging current $I_{ch}$, and the voltage of the battery 21 illustrated in FIG. 7 is similar to that in FIG. 4. In addition, in FIG. 7, although the chargeable current $I_p$ is not illustrated, the chargeable current $I_p$ changes similarly to FIG. 4. When the charging of the battery 21 is temporarily stopped from time t2 to time t3 in FIG. 7, the current of the battery 21 decreases. More specifically, the voltage of the battery 21 rapidly decreases at time t2 and then gradually decreases. The rapid decrease in the voltage at time t2 is a voltage drop $\Delta Vo$ caused by the member resistance of the battery 21. In addition, the gradual decrease in voltage immediately after time t2 is a voltage drop $\Delta Vp$ due to the electrochemical reaction of the battery 21 and the diffusion of lithium ions.

The charging control means 1 (see FIG. 2) acquires, as the OCV corresponding to a predetermined SOC, the measurement value of the voltage of the battery 21 when a predetermined time (a time from time t2 to time t3) has elapsed from time t2 at which the charging of the battery 21 is temporarily stopped. In addition, the charging control means 1 (see FIG. 2) calculates the resistance component Ro (see FIG. 5) that does not depend on the energization time of the battery 21 and the resistance component Rp (see FIG. 5) that changes depending on the energization time of the battery 21 on the basis of following Formulas (1) and (2).

$$Ro = \Delta Vo/I \ \ldots \ Formula \ (1)$$

$$Rp = \Delta Vp/I \ \ldots \ Formula \ (2)$$

In this manner, the charging control means 1 calculates the battery parameters (OCV, Ro, Rp) of the battery 21. Note that each battery parameter of the battery 21 changes depending on the SOC of the battery 21. For example, as the SOC of the battery 21 increases, the internal resistance decreases. Therefore, for example, a predetermined SOC serving as a criterion for calculating the internal resistance of the battery 21 is often set in advance. The charging control means 1 calculates the total internal resistance R1 of the battery 21 by taking the sum of the resistance components Ro and Rp at the predetermined SOC as the criterion.

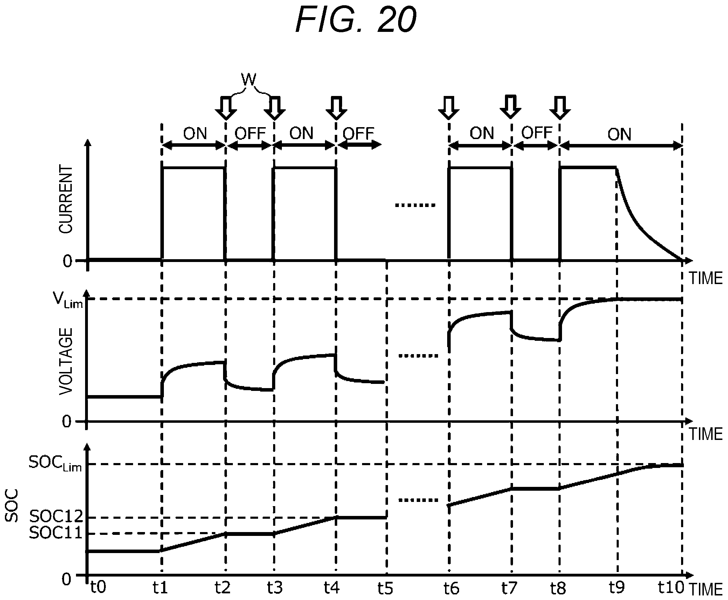

FIG. 20 is a time chart illustrating changes in current, voltage, and SOC of the battery when charging is intermittently performed in another comparative example.

Note that a horizontal axis in FIG. 20 represents a time. A vertical axis of FIG. 20 represents the charging current of the battery 21, the voltage of the battery 21, and the SOC of the battery 21 in order from the top of the drawing. In the example of FIG. 20, SOC thresholds SOC11, SOC12, and so on when the battery 21 is intermittently charged are set at relatively small intervals (for example, every 5% in SOC). Then, for example, charging is performed from time t1 (charging is "ON"), and charging is temporarily stopped (charging is "OFF") at time t2 when the SOC of the battery 21 reaches the threshold SOC11. Then, charging is resumed at time t3. When the SOC interval (that is, a difference between thresholds of adjacent SOCs) when the battery 21 is intermittently charged is finely set as described above, the time required for full charge becomes longer accordingly. On the other hand, when the SOC interval when the battery 21 is intermittently charged is excessively long, the accuracy when estimating the characteristics of the battery 21 becomes low.

In this regard, in the first embodiment, the charging control means 1 sets the SOC interval at the time of the first intermittent charging of the battery 21 to be long (rough), and in the second intermittent charging, charging is temporarily stopped at a timing different from that at the time of the first intermittent charging. That is, in the first embodiment, the battery parameter of the battery 21 is estimated on the basis of data obtained by the charging control means 1 intermittently charging the battery 21 twice in total. As a result, the time required for charging can be shortened, and the battery parameter of the battery 21 can be estimated with high accuracy.

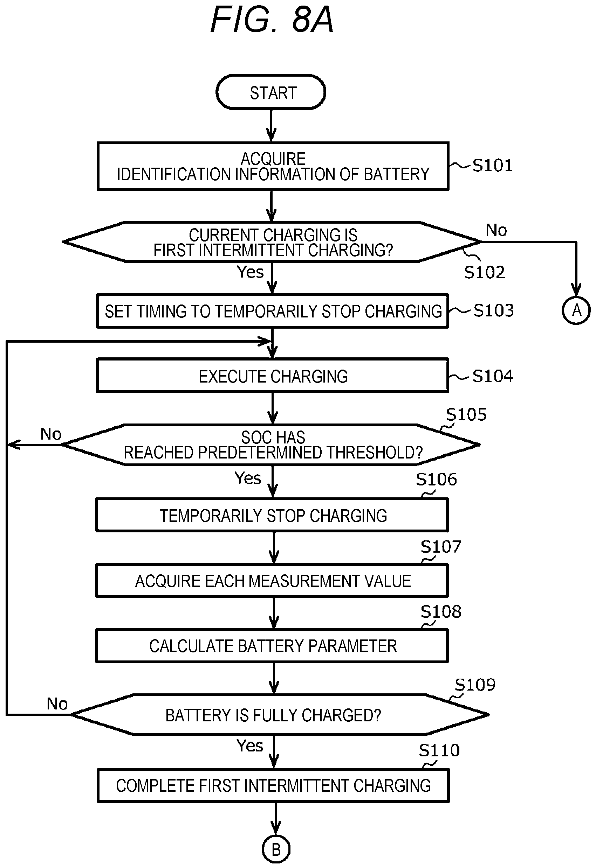

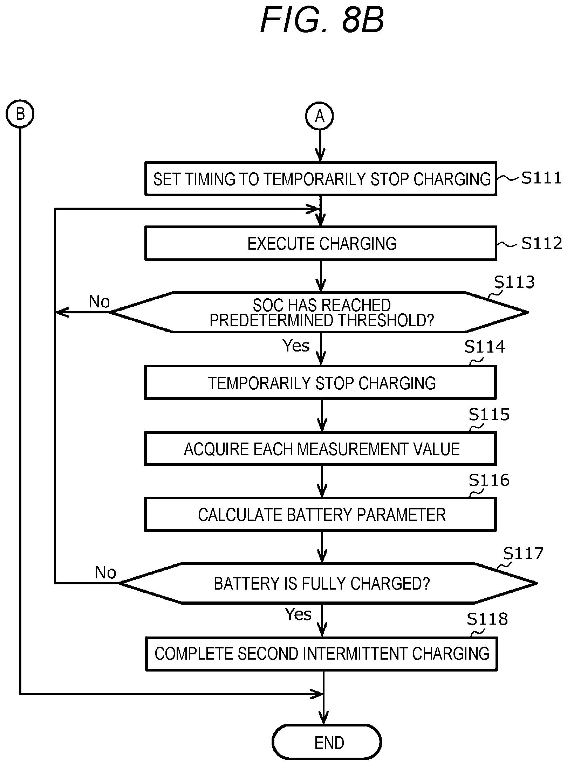

FIGS. 8A and 8B are flowcharts of processing executed by the charging control means (see FIGS. 1 and 2 as appropriate).

Note that it is assumed that a charging plug (not illustrated) is inserted into the insertion port 24 (see FIG. 1) of the vehicle 20 (see FIG. 1) at the time of "START" in FIG. 8A, and communication is started between the charger 10 and the vehicle 20.

In step S101, the charging control means 1 acquires the identification information of the battery 21. That is, the charging control means 1 communicates with the vehicle 20 and acquires predetermined identification information allocated to the battery 21. Note that the identification information of the vehicle 20 may be used instead of the identification information of the battery 21.

In step S102, in the latest predetermined period, the charging control means 1 determines whether current charging is the first intermittent charging. That is, the charging control means 1 determines whether intermittent charging for estimating the battery parameter of the battery 21 has not been performed within a past predetermined period (for example, within several months). This predetermined period is a period in which there is a high possibility that the deterioration of the battery 21 is progressing (that is, the characteristics of the battery 21 are changed), and is set in advance. Each time this predetermined period elapses, the intermittent charging is performed twice in total. In step S102, when the current charging is the first intermittent charging (S102: Yes), the processing of the charging control means 1 proceeds to step S103.

In step S103, the charging control means 1 sets a timing to temporarily stop charging. That is, the charging control means 1 sets, by the charging stop condition determination unit 12 (see FIG. 2), the SOC interval when the battery 21 is intermittently charged. For example, the charging control means 1 sets the SOC interval in the intermittent charging to be long, such that the charging is temporarily stopped every 20% at the SOC interval. The SOC interval may be set in advance or may be appropriately changed.

For example, the charging control means 1 may change the SOC interval in the intermittent charging on the basis of a congestion state of a charging station (not illustrated) provided with the charger 10. That is, when the charging is temporarily stopped each time the charging rate of the battery 21 increases by a first predetermined value, the charging control means 1 may change the first predetermined value on the basis of an allowable time for performing the first (current) intermittent charging. Specifically, the charging control means 1 increases the first predetermined value as the allowable charging time is shorter. As a result, the number of times of temporarily stopping the charging of the battery 21 is reduced, so that the battery 21 is fully charged in a relatively short time. As a result, the charging control means 1 can complete the charging of the battery 21 within a predetermined allowable time.

In step S104, the charging control means 1 charges the battery 21. That is, the charging control means 1 outputs a predetermined charging command to the charging circuit 4 (see FIG. 1) on the basis of the charging current command value transmitted from the vehicle 20, thereby charging the battery 21. As the charging of the battery 21 progresses, the SOC of the battery 21 increases.

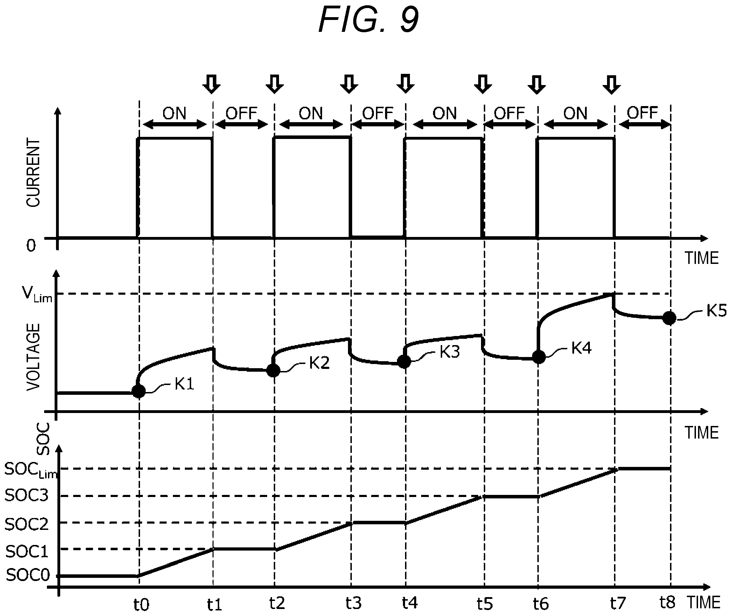

In step S105, the charging control means 1 determines whether the SOC of the battery 21 has reached a predetermined threshold. The predetermined threshold (for example, predetermined thresholds SOC1, SOC2, and SOC3 illustrated in FIG. 9) is an SOC threshold serving as a criterion for determining whether to temporarily stop the charging of the battery 21, and is set in the processing of step S103. In step S105, when the SOC of the battery 21 has not reached the predetermined threshold (S105: No), the charging control means 1 continues the charging (S104). In addition, in step S103, when the SOC of the battery 21 reaches the predetermined threshold (S105: Yes), the processing of the charging control means 1 proceeds to step S106.

In step S106, the charging control means 1 temporarily stops the charging of the battery 21. That is, the charging control means 1 controls the charging circuit 4 (see FIG. 1) such that the charging current of the battery 21 becomes substantially 0. In this case, the charging control means 1 may lower the value of the chargeable current of the battery 21 to 0. As described above, since the charging current command value transmitted from the vehicle 20 to the charger 10 is reset to a value equal to or less than the chargeable current (see FIG. 2) transmitted from the charger 10 to the vehicle 20, the charging current command value peaks and is forcibly lowered to 0. Also in such a method, the charging of the battery 21 can be temporarily stopped.

In step S107, the charging control means 1 acquires each measurement value. That is, the charging control means 1 acquires the measurement value of the state quantity including the voltage of the battery 21 measured by the voltage measurement means 2, the charging current measured by the current measurement means 3, and the SOC of the battery 21 transmitted from the vehicle 20. Each measurement value acquired in step S105 is stored in the storage unit 14 (see FIG. 2) in association with the identification information of the battery 21.

In step S108, the charging control means 1 calculates the battery parameters of the battery 21. That is, the charging control means 1 acquires, as the OCV, the voltage of the battery 21 after a predetermined time has elapsed since the charging of the battery 21 was temporarily stopped. Then, the charging control means 1 stores the OCV of the battery 21 in association with the SOC in the parameter table 14a (see FIG. 2). The internal resistance of the battery 21 may be calculated in SOCs of different magnitudes (second embodiment), but in the first embodiment, the internal resistance is calculated in a predetermined SOC serving as a criterion.

In step S109, the charging control means 1 determines whether the battery 21 is fully charged. In step S109, when the battery 21 is not fully charged (S109: No), the processing of the charging control means 1 returns to step S104, and the charging of the battery 21 is resumed. In this manner, the charging control means 1 intermittently charges the battery 21, and calculates the battery parameter on the basis of the current, the voltage, and the SOC when the charging is temporarily stopped.

In step S109, when the battery 21 is fully charged (S109: Yes), the processing of the charging control means 1 proceeds to step S110. Note that the battery 21 is not particularly required to be fully charged, and the charging may be completed at an SOC lower than the fully charged state, such as an SOC of 90%. In step S110, the charging control means 1 completes the first intermittent charging of the battery 21.

FIG. 9 is a time chart regarding the first intermittent charging.

Note that a horizontal axis in FIG. 9 represents a time. A vertical axis of FIG. 9 represents the charging current of the battery 21, the voltage of the battery 21, and the SOC of the battery 21 in order from the top of the drawing.

The predetermined thresholds SOC1, SOC2, and SOC3 illustrated in FIG. 9 are thresholds (the predetermined threshold in S105 in FIG. 8A) serving as a determination criterion when the charging is temporarily stopped, and are set in the processing of step S103. For example, in the first (current) intermittent charging, the charging control means 1 temporarily stops the charging each time the SOC (charging rate) of the battery 21 rises by a first predetermined value. The first predetermined value is, for example, within a range of 10% or more and 50% or less.

When the SOC interval when the charging is intermittently performed is made relatively large in this manner, the number of temporary stops is reduced, so that the time required for charging can be shortened. Note that in FIG. 9, the SOC intervals when the charging is temporarily stopped are set to equal intervals, but may be unequal intervals. As illustrated in FIG. 9, the OCV of the battery 21 is measured at each of measurement points K1 to K5. That is, the charging control means 1 acquires, as the OCV, the voltage value at the measurement point K1 at the start of charging of the battery 21, and also acquires, as the OCV, the voltage values at the measurement points K2 to K5 when a predetermined time has elapsed since the temporary stop of the charging.

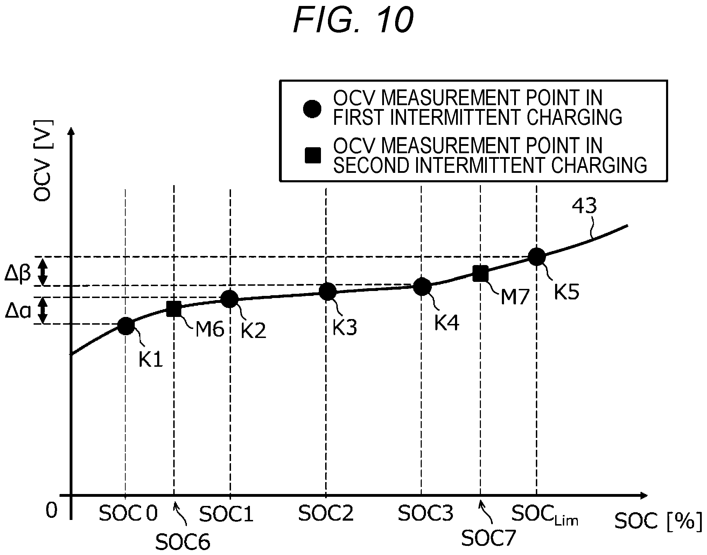

FIG. 10 is an explanatory diagram illustrating a relationship between the SOC and the OCV of the battery.

Note that in FIG. 10, a horizontal axis represents the SOC of the battery 21, and a vertical axis represents the OCV of the battery 21. A black circle in FIG. 10 indicates a measurement point of the OCV obtained in the first intermittent charging. A black square in FIG. 10 indicates a measurement point of the OCV obtained by the second intermittent charging. By measuring the OCV at the five measurement points K1 to K5 illustrated in FIG. 9, data of five black circles (measurement points K1 to K5) illustrated in FIG. 10 is obtained. The data of these measurement points K1 to K5 are actual OCVs corresponding to the SOC of the battery 21.

In step S102 of FIG. 8A, when the current charging is not the first intermittent charging (S102: No), the processing of the charging control means 1 proceeds to step S111 of FIG. 8B. For example, when the current charging is the second intermittent charging, the processing of the charging control means 1 proceeds to step Sill. As described above, in the first embodiment, the charging control means 1 performs intermittent charging twice in total to create the predetermined parameter table 14a (see FIG. 2).

In step 5111 of FIG. 8B, the charging control means 1 sets a timing to temporarily stop charging. That is, the charging control means 1 sets, by the charging stop condition determination unit 12 (see FIG. 2), the threshold of the SOC when the charging of the battery 21 is temporarily stopped. When setting such a threshold of the SOC, the charging control means 1 reads data of the measurement points K1 to K5 (see FIG. 10) obtained at the time of the first intermittent charging. Then, the charging control means 1 calculates each of differences between OCVs at adjacent measurement points.

In the example of FIG. 10, a difference $\Delta\alpha$ between OCVs at the measurement points K1 and K2 is relatively large, and a difference $\Delta\beta$ between OCVs at the measurement points K4 and K5 is also relatively large. As described above, for a case where the difference between OCVs at adjacent measurement points is equal to or larger than a predetermined value (second predetermined value), the charging control means 1 sets the SOC of a new measurement point (a measurement point at the time of temporarily stopping charging) to compensate for data therebetween. That is, the next measurement is performed at a place where the sensitivity of the OCV to the change of the SOC is high, so that the data indicating the characteristics of the OCV is extracted without waste.

As described above, for a case where a difference between the OCVs (open circuit voltage) of the battery 21 at adjacent timings among a plurality of timings (SOC) at which charging is temporarily stopped in the first (current) intermittent charging is equal to or larger than the predetermined value (second predetermined value), the charging control means 1 temporarily stops the charging in the next intermittent charging at another timing between the adjacent timings. Note that in the first intermittent charging, for a case where the difference between OCVs at adjacent measurement points is equal to or larger than the predetermined value, for example, a center point between the SOCs (for example, SOC0 and SOC1 in FIG. 10) of the adjacent measurement points may be set as a timing to temporarily stop charging, or may be a point other than the center.

On the other hand, a difference between OCVs at the measurement points K2 and K3 illustrated in FIG. 10 is relatively small, and a difference between OCVs at the measurement points K3 and K4 is also relatively small. As described above, for a case where the difference between OCVs at adjacent measurement points is less than the predetermined value (second predetermined value), there is no particular problem even if it is considered that the OCV increases linearly between the adjacent measurement points, and thus it is not particularly necessary to obtain a new measurement point. Therefore, in the second intermittent charging, the charging control means 1 continues the charging without temporarily stopping in this section (for example, a section of SOC between the measurement points K2 and K3).

As described above, for a case where the difference between the OCVs (open circuit voltage) of the battery 21 at adjacent timings among the plurality of timings (SOC) at which charging is temporarily stopped in the first (current) intermittent charging is less than the second predetermined value, the charging control means 1 continues next charging without temporarily stopping between the adjacent timings. As a result, it is possible to prevent charging from being temporarily stopped wastefully and to shorten the time required for charging. Note that the second predetermined value is a threshold of the width of the OCV serving as a criterion for determining whether it is necessary to obtain a new measurement point, and is set in advance.

In step S112 of FIG. 8B, the charging control means 1 charges the battery 21. Next, in step S113, the charging control means 1 determines whether the SOC of the battery 21 has reached a predetermined threshold. The predetermined threshold is an SOC threshold serving as a criterion for determining whether to temporarily stop the charging of the battery 21, and is set in the processing of step 5111. In step S113, when the SOC of the battery 21 has not reached the predetermined threshold (S113: No), the charging control means 1 continues the charging (S112). In addition, in step S113, when the SOC of the battery 21 reaches the predetermined threshold (S113: Yes), the processing of the charging control means 1 proceeds to step S114.

In step S114, the charging control means 1 temporarily stops the charging of the battery 21. In step S115, the charging control means 1 acquires each measurement value. That is, the charging control means 1 acquires measurement values of the state quantity including the voltage, the charging current, and the SOC of the battery 21. Each measurement value acquired in step S105 is stored in the storage unit 14 (see FIG. 2) in association with the identification information of the battery 21.

In step S116, the charging control means 1 calculates the battery parameters of the battery 21. As described above, the battery parameters of the battery 21 include the OCV.

In step S117, the charging control means 1 determines whether the battery 21 is fully charged. In step S117, when the battery 21 is not fully charged (S117: No), the charging control means 1 resumes the charging (S112). In addition, in step S117, when the battery 21 is fully charged (S117: Yes), the processing of the charging control means 1 proceeds to step S118.

In step S118, the charging control means 1 completes the second intermittent charging of the battery 21. After performing the processing of step S118, the charging control means 1 ends a series of processes regarding charging (END).

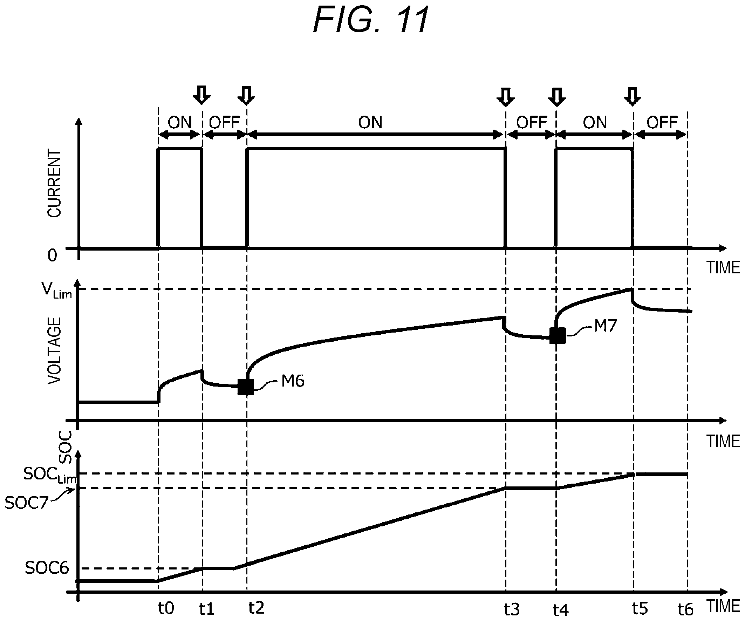

FIG. 11 is a time chart regarding the second intermittent charging.

Predetermined thresholds SOC6 and SOC7 illustrated in FIG. 11 are thresholds (the predetermined threshold in S113 in FIG. 8B) serving as a determination criterion when the charging is temporarily stopped, and are set in the processing of step 5111. The charging control means 1 temporarily stops charging at the predetermined thresholds SOC6 and SOC7, and measures (calculates) the OCV and the like of the battery 21, thereby obtaining data of the measurement points M6 and M7 illustrated in FIG. 11. As described above, the charging control means 1 performs the second (next) intermittent charging at a timing different from the first (current) intermittent charging. The above-described "timing" is set on the basis of the charging rate (or the voltage or the internal resistance) of the battery 21 when charging is temporarily stopped in the intermittent charging of the battery 21.

In the example of FIG. 11, the number of times of temporary stop of charging is 2 in total, and thus the time required to fully charge the battery 21 can be shortened. In addition, the charging control means 1 appropriately sets the predetermined thresholds SOC6 and SOC7 (Sill in FIG. 8B), so that battery parameters such as the OCV of the battery 21 can be calculated. The data of OCV at the measurement points M6 and M7 illustrated in FIG. 11 is stored in the parameter table 14a (see FIG. 2) in association with the SOC value. As a result, each lattice of the parameter table 14a is filled.

For example, the charging control means 1 may specify the OCV curve 43 by performing predetermined curve approximation on the basis of the measurement points K1 to K5 and the measurement points M6 and M7 illustrated in FIG. 10. The data regarding the OCV curve 43 is used for calculation of a deterioration rate (state of health: SOH) of the battery 21 and the like. Specifically, when the battery 21 is charged again after the OCV curve 43 is specified, the charging control means 1 calculates the battery capacity on the basis of a voltage Va (see FIG. 7) of the battery 21 at the start of charging, a voltage Vb (see FIG. 7) of the battery 21 at the time of temporarily stopping charging, and a current integration amount therebetween. Then, the charging control means 1 calculates the deterioration rate of the battery 21 on the basis of the SOC at the start of charging, the SOC at the time of temporarily stopping charging, and the above-described battery capacity. Note that, instead of the charging control means 1, a server (not illustrated) that communicates with the charger 10 may perform calculation of the deterioration rate and the like.

Note that, for a predetermined period (for example, for several months) after completion of creation of the parameter table 14a (see FIG. 2), the operation management system (not illustrated) of the vehicle 20 may set the travel route of the battery 21 on the basis of the parameter table 14a. During this predetermined period, it is sufficient if the charger 10 performs normal continuous charging when charging the battery 21, and it is not particularly necessary to perform intermittent charging. Then, in a case where a predetermined period has elapsed since the intermittent charging is performed twice in total, and there is a possibility that the deterioration of the battery 21 has progressed, the charging control means 1 performs the intermittent charging again to update the battery parameter.

<Effects>

According to the first embodiment, the battery parameters such as the OCV and the internal resistance of the battery 21 can be calculated with high accuracy on the basis of the voltage, current, and SOC in the process in which the charging control means 1 intermittently charges the battery 21. In addition, the charging control means 1 performs the intermittent charging in two divided times, so that it is possible to suppress an excessive increase in the time required for charging. Therefore, according to the first embodiment, it is possible to appropriately calculate the battery parameter of the battery 21 by the charging control means 1 while suppressing an increase in the time required for charging the battery 21.

In addition, when the charging control means 1 performs the second intermittent charging, the timing of the temporary stop of the charging is set on the basis of the battery parameter in the first intermittent charging (Sill in FIG. 8B). As a result, the charging control means 1 temporarily stops the charging of the battery 21 at a place where the sensitivity of the battery parameter such as the OCV is high, so that the battery parameter at this place can be acquired. In addition, even when the type and material of the battery 21 are unknown, the charging control means 1 can estimate the battery parameters, so that the versatility of the charging control system 100 can be enhanced.

In addition, for example, when the vehicle 20 is managed as an EV truck for distribution delivery by a predetermined operation management system (not illustrated), the operation management system side can grasp the degree of deterioration of the battery 21 on the basis of the battery parameter. As a result, the operation management system can estimate the remaining travelable distance of the vehicle 20 with high accuracy and appropriately set the scheduled travel route of the vehicle. Therefore, according to the first embodiment, it is possible to achieve both suppression of a decrease in the operation efficiency of the vehicle 20 and securing of the detection accuracy of the battery parameter.

<<Second embodiment>>

The second embodiment is different from the first embodiment in that the internal resistance (direct current resistance: DCR) of the battery 21 corresponding to each SOC is calculated in the process in which the charging control means 1 (see FIG. 2) intermittently charges the battery 21. In addition, in the second embodiment, the processing executed by the charging control means 1 is similar to that of the first embodiment (see FIGS. 8A and 8B), but is different in that the charging control means 1 calculates the DCR instead of (or together with) calculating the OCV. Note that the other configurations (the configuration of the charging control system 100 and the like: see FIGS. 1 to 3) are the same as those of the first embodiment. Therefore, portions different from those of the first embodiment will be described, and description of redundant portions will be omitted.

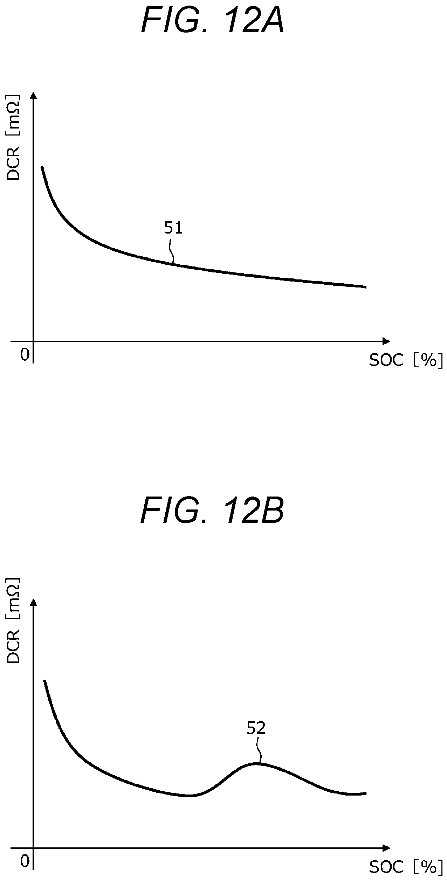

FIG. 12A is an explanatory diagram illustrating a relationship between the SOC and the DCR when the battery is the NMC-C-based battery.

Note that a horizontal axis in FIG. 12A represents the SOC of the battery 21 (see FIG. 1). A vertical axis in FIG. 12A is the DCR (internal resistance) of the battery 21. As illustrated in FIG. 12A, in a DCR curve 51 of the NMC-C-based battery, the DCR of the battery 21 decreases as the SOC of the battery 21 increases.

FIG. 12B is an explanatory diagram illustrating a relationship between the SOC and the DCR when the battery is an LFP-C-based battery.

As illustrated in FIG. 12B, in a DCR curve 52 of the LFP-C-based battery, as the SOC of the battery 21 increases from a value of 0, the DCR decreases, then increases once, and then decreases again. As described above, the shape of the DCR curve varies depending on the type of the battery 21.

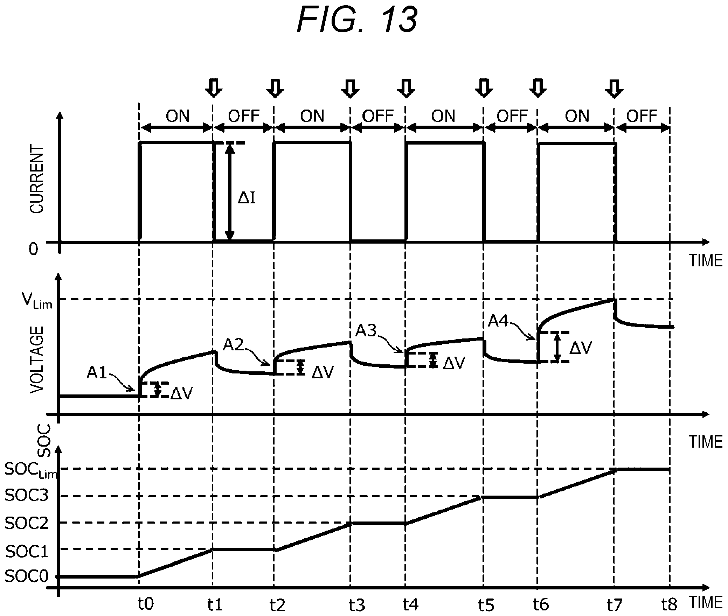

FIG. 13 is a time chart regarding the first intermittent charging in the charging control system according to the second embodiment.

In the example of FIG. 13, the charging is sequentially temporarily stopped when the SOC of the battery 21 reaches the predetermined thresholds SOC1, SOC2, and SOC3. Further, the charging control means 1 calculates the internal resistance at each SOC on the basis of a change amount $\Delta V$ (an increase amount in start-up) in voltage at times t2, t4, and t6 at which the charging is temporarily stopped in addition to time t0 at which the charging is started.

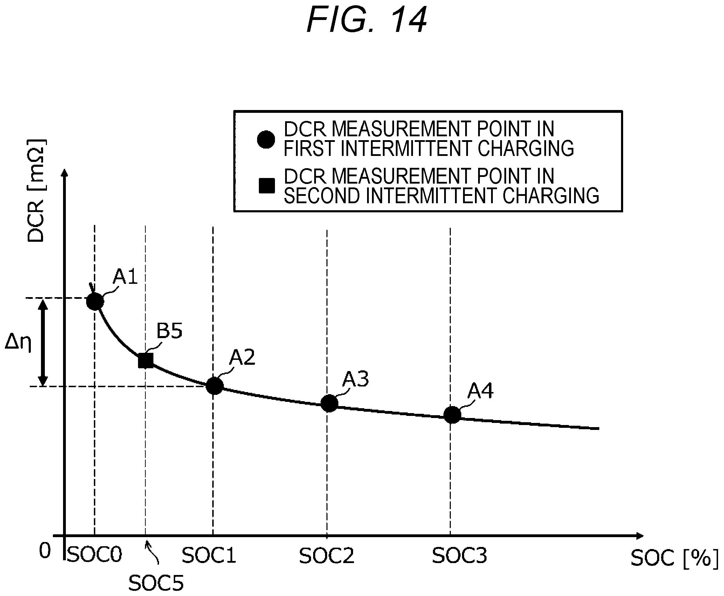

FIG. 14 is an explanatory diagram illustrating a relationship between the SOC and the DCR of the battery.

Note that in FIG. 14, a horizontal axis represents the SOC of the battery 21, and a vertical axis represents the DCR (internal resistance) of the battery 21. A black circle illustrated in FIG. 14 indicates a measurement point of DCR obtained in the first intermittent charging. In addition, a black square illustrated in FIG. 14 indicates a measurement point of DCR obtained in the second intermittent charging. By measuring DCR at four measurement points A1 to A4 in FIG. 13, data of four black circles (measurement points A1 to A4) in FIG. 14 is obtained. The data of the measurement points A1 to A4 is data of the actual DCR corresponding to the SOC of the battery 21.

In the example of FIG. 14, a difference $\Delta \eta$ between DCRs at the measurement points A1 and A2 is relatively large. As described above, for a case where the difference between DCRs at adjacent measurement points is equal to or larger than a predetermined value (third predetermined value) or more, the charging control means 1 sets the SOC of a new measurement point (a measurement point at the time of temporarily stopping charging) to compensate for data therebetween. That is, the next measurement is performed at a place where the sensitivity of the DCR to the change in the SOC is high, so that the data indicating the characteristic of the DCR is extracted without waste.

As described above, for a case where a difference between the DCRs (internal resistances) of the battery 21 at adjacent timings among a plurality of timings (SOC) at which charging is temporarily stopped in the first (current) intermittent charging is equal to or larger than the predetermined value (third predetermined value), the charging control means 1 temporarily stops the charging in the second (next) intermittent charging at another timing between the adjacent timings.

On the other hand, a difference between the DCRs of the measurement points A2 and A3 is relatively small, and a difference between the DCRs of the measurement points A3 and A4 is also relatively small. As described above, for a case where the difference between DCRs at the adjacent measurement points is less than the predetermined value (third predetermined value), there is no particular problem even if it is considered that the DCR increases linearly between the adjacent measurement points, and thus it is not particularly necessary to obtain a new measurement point. Therefore, in the second intermittent charging, the charging control means 1 continues the charging without temporarily stopping in this section (for example, a section of SOC between the measurement points A2 and A3).

As described above, for a case where the difference between the DCRs (internal resistance) of the battery 21 at adjacent timings among the plurality of timings (SOC) at which charging is temporarily stopped in the first (current) intermittent charging is less than the predetermined value (third predetermined value), the charging control means 1 continues the second (next) charging without temporarily stopping between the adjacent timings. As a result, it is possible to prevent charging from being temporarily stopped wastefully and to shorten the time required for charging. As described above, in the charging of the battery 21, the charging control means 1 performs the next intermittent charging at a timing different from the current intermittent charging. The above-described timing is set on the basis of the DCR (internal resistance) of the battery 21 when charging is temporarily stopped in intermittent charging of the battery 21.

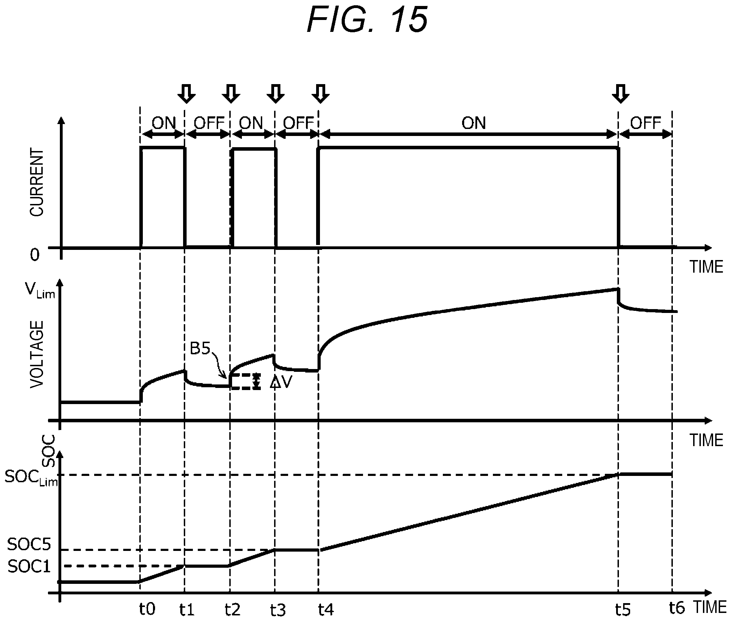

FIG. 15 is a time chart regarding the second intermittent charging.

In the example of FIG. 15, in addition to the predetermined threshold SOC1, charging is temporarily stopped at a predetermined threshold SOC5, and the change amount ΔV of the voltage of the battery 21 at the time t2 is measured. As a result, the DCR at the measurement point B5 in FIG. 14 is calculated. The data of DCR at the measurement point B5 obtained in the second intermittent charging is stored in the parameter table 14a (see FIG. 2) in association with the SOC. As a result, each lattice of the parameter table 14a is filled. Note that in the second embodiment, a case where the DCR is calculated in a plurality of SOCs having different magnitudes has been described, but in addition to this, the OCV in each SOC may be measured.

<Effects>

According to the second embodiment, the DCR of the battery 21 can be calculated with high accuracy on the basis of the measured value of the voltage/current and the SOC in the process in which the charging control means 1 intermittently charges the battery 21. In addition, the charging control means 1 performs the intermittent charging in two divided times, so that it is possible to suppress an excessive increase in the time required for charging.

<<Third embodiment»

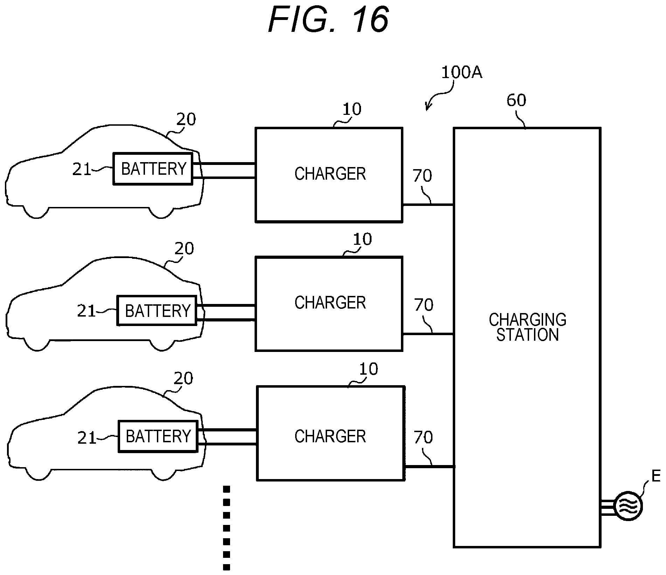

The third embodiment is different from the first embodiment in that a plurality of chargers 10 (see FIG. 16) are connected to a charging station 60 (see FIG. 16). In addition, the third embodiment is different from the first embodiment in that when the plurality of chargers 10 intermittently charge the battery 21, the timing of the charger 10 is shifted from the others. Note that the configuration and the like of each charger 10 are similar to those of the first embodiment (see FIGS. 1 to 3). Therefore, portions different from those of the first embodiment will be described, and description of redundant portions will be omitted.

FIG. 16 is a configuration diagram including a charging control system 100A according to the third embodiment.

As illustrated in FIG. 16, the charging control system 100A includes the plurality of chargers 10 and the charging station 60. Each of the plurality of chargers 10 charges the battery 21 of the vehicle 20. The charging station 60 supplies the power supplied from the commercial power supply E to the plurality of chargers 10 and exchanges data with the plurality of chargers 10. As illustrated in FIG. 16, the charging station 60 is connected to each of the plurality of chargers 10 via a charging cable 70.

Note that the charging station 60 may perform some or all of the functions of the charging control means 1 (see

FIG. 2) that controls charging of the battery 21. For example, when the plurality of chargers 10 perform the intermittent charging, the charging station 60 may set a timing to temporarily stop charging. Hereinafter, as an example, a case where three chargers 10 intermittently charge the battery 21 in parallel will be described, but the number of chargers 10 that perform charging in parallel is not particularly limited.

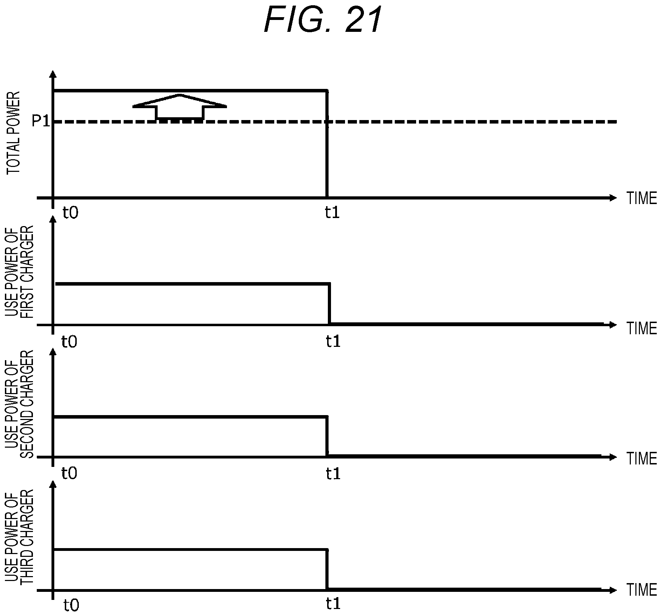

FIG. 21 is a time chart illustrating a change in total power of a total of three chargers and a change in power used by each charger in the comparative example.

Note that a horizontal axis in FIG. 21 represents a time. A vertical axis of FIG. 21 represents the total power of the total of three chargers 10, the use power of the first charger 10, the use power of the second charger 10, and the use power of the third charger 10 in order from the top of the drawing.

In the comparative example of FIG. 21, each of the three chargers 10 continuously performs charging from time t0, and is fully charged at time t1 and ends charging. As described above, when charging is continuously performed in parallel by the plurality of chargers 10, the total power at every moment from time t0 to time t1 at which charging is executed increases. In the comparative example of FIG. 21, the total power from time t0 to time t1 exceeds a predetermined upper limit value P1(for example, contracted power). In this regard, in the third embodiment, the plurality of chargers 10 performs intermittent charging at different timings so that the total power of the three chargers 10 does not exceed the upper limit value P1.

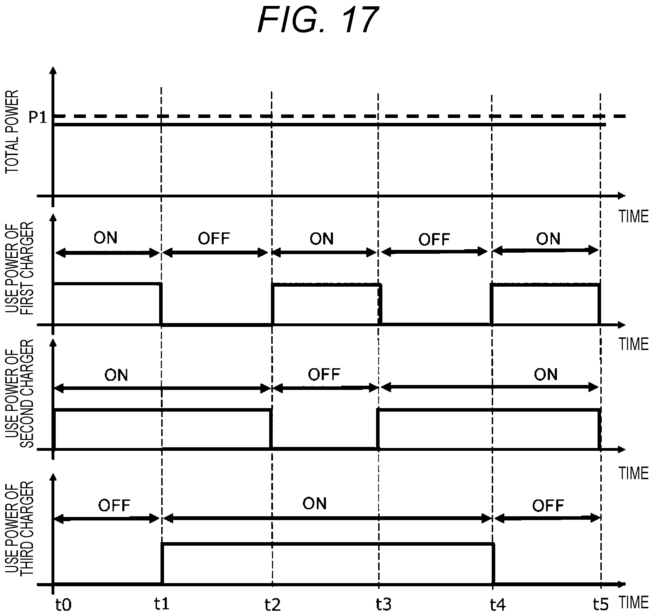

FIG. 17 is a time chart illustrating a change in power used by each charger and a change in total power in the third embodiment.

In the example of FIG. 17, each of three chargers 10 intermittently charges the battery 21. As described above, when the batteries 21 of the vehicle 20 (moving object) are connected one-to-one to the plurality of chargers 10 provided in the charging station 60 (see FIG. 16), the charging control means 1 (see FIG. 1) intermittently performs charging by each charger 10. In addition, the number of chargers, which have overlapping time zones for charging, among the plurality of chargers 10 is smaller than the total number of the plurality of chargers 10. In the example of FIG. 17, the number of chargers, which have overlapping time zones for charging, among the three chargers 10 is two. As a result, the total power of the total of three chargers 10 is suppressed to the upper limit value P1 or less, so that the power cost in the charging station 60 can be reduced.

Note that, to describe FIG. 17 from another viewpoint, when some chargers 10 (for example, the first and second chargers 10 in FIG. 17) among the plurality of chargers 10 perform charging, the charging control means 1 performs "processing" of temporarily stopping the charging of another charger 10 (for example, the third charger 10). Here, the charging control means 1 preferably performs the above-described "processing" so that the total value of the use power of the plurality of chargers 10 becomes equal to or less than the predetermined upper limit value P1. As a result, the total power of the total of three chargers 10 can be suppressed to the upper limit value P1 or less.

Note that, in a case where charging is continuously performed by the plurality of chargers 10 to which the battery 21 is connected, when it is predicted that the total value of the use power of the plurality of chargers 10 exceeds a predetermined upper limit value (see FIG. 21), the charging control means 1 may perform the above-described "processing". Note that FIG. 17 is an example, and the timing of temporarily stopping charging is not limited thereto.

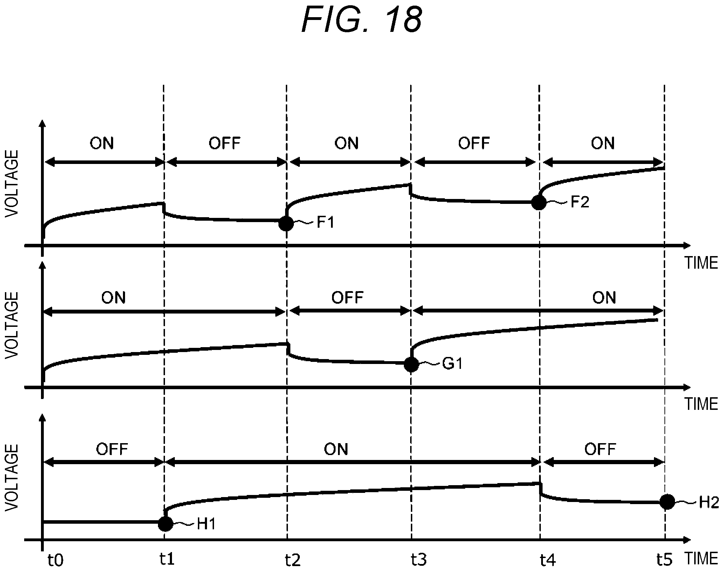

FIG. 18 is a time chart illustrating changes in the voltages of the three batteries.

Note that a horizontal axis in FIG. 18 represents a time. A vertical axis of FIG. 18 represents the voltage of the battery 21 connected to the first charger 10, the voltage of the battery connected to the second charger 10, and the voltage of the battery connected to the third charger 10 in order from the top of the drawing. In addition, "ON" in FIG. 18 indicates that charging is being executed, and "OFF" indicates that charging is temporarily stopped. A change in the voltage of each battery 21 in FIG. 18 corresponds to ON/OFF of charging in FIG. 17.

For example, for the battery 21 (corresponding to the upper part of the drawing of FIG. 18) connected to the first charger 10, the charging control means 1 acquires the OCVs at the measurement points F1 and F2 when a predetermined time has elapsed since the temporary stop of charging. In addition, the charging control means 1 also performs similar processing on the battery 21 (corresponding to the middle part of the drawing of FIG. 18) connected to the second charger 10 and the battery 21 (corresponding to the lower part of the drawing of FIG. 18) connected to the third charger 10 (measurement point G1, H1, H2). As a result, it is possible to acquire the OCV of each battery 21 while suppressing the total power of the three chargers 10 to the upper limit value P1 (see FIG. 17) or less.

Note that the charging control means 1 may calculate the DCR (internal resistance) in addition to the OCV of the battery 21. In addition, in the three batteries 21 connected to the three chargers 10, the battery on which the first intermittent charging described in the first embodiment is performed and the battery on which the second intermittent charging is performed may be mixed. In addition, among the three batteries 21, there may be one or more batteries on which the OCV measurement and the DCR calculation are not particularly performed. For example, even if the generation of the parameter table 14a (see FIG. 2) of battery parameters such as OCV and DCR has already been completed, the intermittent charging may be performed. This is because the total power of the plurality of chargers 10 can be suppressed to the upper limit value P1 (see FIG. 17) or less by performing the intermittent charging as described above.

<Effects>

According to the third embodiment, the total power of the plurality of chargers 10 connected to the charging station 60 can be suppressed to the predetermined upper limit value P1 or less, and the power cost can be reduced. In addition, the charging control means 1 can appropriately calculate battery parameters such as the OCV and the DCR of the battery 21 while suppressing an increase in the time required for charging each battery 21.

<<Modification>>

Although the charging control systems 100, 100A and the like have been described in the embodiments, the present invention is not limited to these descriptions, and various modifications can be made.

For example, in each embodiment, a case where the charging control means 1 executes the intermittent charging on the basis of the SOC of the battery 21 has been described, but the voltage of the battery 21 may be used instead of the SOC of the battery 21. That is, the charging control means 1 may temporarily stop charging each time the voltage of the battery 21 reaches a predetermined threshold in accordance with the charging.

In each embodiment, a case where the charging control means 1 intermittently charges the battery 21 twice in total has been described, but the number of intermittent charges may be 3 or more. In this case, the charging control means 1 performs the next (for example, the third time) intermittent charging at a timing different from the current (for example, the second time) intermittent charging.

In addition, in each embodiment, the OCV and the DCR are exemplified as the battery parameters of the battery 21, but the present invention is not limited thereto. For example, a time constant $\tau$ of the polarization phenomenon in the battery 21 may be included as the battery parameter. In this case, the charging control means 1 calculates the time constant $\tau$ as the time required for the voltage drop $\Delta Vp$ (see FIG. 7) up to a certain point of time to decrease by about 63.2% after the current interruption.

In addition, the charging control means 1 may specify the type of the battery 21 on the basis of the battery parameter obtained by the first (current) intermittent charging. In this case, the charging control means 1 may set a timing at which charging is temporarily stopped in the second (next) intermittent charging, on the basis of the battery parameter obtained in the first (current) intermittent charging and the database of the battery parameter varying depending on the type of the battery 21. Note that it is assumed that the data of the OCV curve and the DCR curve of the battery 21 are stored in advance in association with the type of the battery 21. In this case, the charging control means 1 sets a timing at which the second (next) charge is temporarily stopped, for example, at an inflection point of the OCV curve or the like corresponding to the type of the battery 21 specified on the basis of the battery parameter. As a result, the optimum timing at which the charging control means 1 temporarily stops the charging of the battery 21 can be set, and the characteristics of the battery 21 can be appropriately extracted.

In addition, in each embodiment, a case where the charger 10 includes the charging control means 1 (see FIG. 1) has been described, but the present invention is not limited thereto. That is, a server (not illustrated) that communicates with the charger 10 or the charging station 60 may perform at least a part of the function of the charging control means 1.

In addition, in each embodiment, a case where a chargeable current is lowered to 0 when the charging control means 1 temporarily stops (OFF) the charging of the battery 21 has been described, but the present invention is not limited thereto. That is, the charging control means 1 may switch ON/OFF of charging without particularly changing the chargeable current.

In addition, in each embodiment, a case where the charging control means 1 temporarily stops charging while executing constant current charging (CC charging) has been described, but the present invention is not limited thereto. For example, another charging method such as constant power charging may be used.

In each embodiment, the processing in which the charging control means 1 calculates the internal resistance and the like of the battery 21 on the basis of the change amount of the current/voltage at the rising timing of the charge current has been described, but the present invention is not limited thereto. That is, the charging control means 1 may calculate the internal resistance and the like of the battery 21 on the basis of the change amount of current/voltage at the falling timing of the charging current.

In addition, in each embodiment, a case where the charging control means 1 controls the charge current has been described, but each embodiment can also be applied to a bidirectional charger capable of discharging from the vehicle 20 to the charger 10 in addition to charging from the charger 10 to the vehicle 20. Note that the internal resistance of the battery 21 may be different between the time of charging and the time of discharging, and thus, when discharging is possible, the internal resistance of the battery 21 can be accurately calculated by acquiring the internal resistance on the discharge side together.

In addition, in the third embodiment, as illustrated in FIG. 17, a case where charging is intermittently performed by the total of three chargers 10 with timings shifted by a predetermined distance has been described, but the present invention is not limited thereto. For example, a total of two (or a total of two sets of a plurality of chargers) chargers 10 may switch ON/OFF of charging alternately over time, or other charging patterns may be used.

In addition, the embodiments may be appropriately combined. For example, the first embodiment and the second embodiment may be combined, and the charging control means 1 may calculate (acquire) the OCV of the battery 21 and calculate the internal resistance. In addition, a combination of the second embodiment and the third embodiment is also possible.

In addition, in each embodiment, a case where the vehicle 20 is an electric vehicle or a plug-in hybrid vehicle has been described, but the present invention can also be applied to a two-wheeled vehicle or a three-wheeled vehicle driven by electricity. In addition to the vehicle 20, each embodiment can be applied to a "moving object" on water and land such as a railway vehicle on non-electrified lines, a ship, an aircraft, and an agricultural machine. The above-described aircraft also includes an unmanned aerial vehicle and a drone. In addition, each embodiment can also be applied to a power system power storage system.

In addition, the processing (charging control method) executed by the charging control means 1 or the like may be executed as a predetermined program of a computer. The above-described program can be provided via a communication line, or can be distributed by being written in a recording medium such as a CD-ROM.

In addition, each embodiment has been described in detail for easy understanding of the present invention, and is not necessarily limited to those having all the described configurations. In addition, it is possible to add, delete, and replace other configurations for a part of the configuration of the embodiment. In addition, the above-described mechanisms and configurations are described in consideration of necessity for the description, and all the mechanisms and configurations in the product are not necessarily described.

Reference Signs List

1 charging control means
2 voltage measurement means
3 current measurement means
4 charging circuit
10 charger
11 battery state estimation unit
12 charging stop condition determination unit
13 charging control unit
13a charger operation changing unit
13b charging current determination unit
14 storage unit
14a parameter table
20 vehicle (moving object)
21 battery
60 charging station
100, 100A charging control system

**Claims**

1. A charging control system comprising

a charging control means which calculates a predetermined battery parameter of a battery on a basis of a state quantity of the battery when the battery is intermittently charged, wherein the charging control means performs next intermittent charging at a timing different from that of current intermittent charging, and the timing is set on a basis of a charging rate, a voltage, or an internal resistance of the battery when charging is temporarily stopped in intermittent charging of the battery.

2. The charging control system according to claim 1, wherein the charging control means temporarily stops charging each time the charging rate of the battery increases by a first predetermined value in the current intermittent charging.

3. The charging control system according to claim 2, wherein the charging control means changes the first predetermined value on a basis of an allowable time when the current intermittent charging is performed.

4. The charging control system according to claim 3, wherein the charging control means increases the first predetermined value as the allowable time is shorter.

5. The charging control system according to claim 1, wherein

the battery parameter includes an open circuit voltage of the battery, and
for a case where a difference between the open circuit voltages of the battery at adjacent timings among a plurality of timings at which charging is temporarily stopped in the current intermittent charging is equal to or larger than a second predetermined value, the charging control means temporarily stops charging in the next intermittent charging at another timing between the adjacent timings.

6. The charging control system according to claim 1, wherein

the battery parameter includes an open circuit voltage of the battery, and
for a case where a difference between the open circuit voltages of the battery at adjacent timings among a plurality of timings at which charging is temporarily stopped in the current intermittent charging is less than a second predetermined value, the charging control means continues next charging without temporarily stopping between the adjacent timings.

7. The charging control system according to claim 1, wherein

the battery parameter includes an internal resistance of the battery, and
for a case where a difference between the internal resistances of the battery at adjacent timings among a plurality of timings at which charging is temporarily stopped in the current intermittent charging is equal to or larger than a third predetermined value, the charging control means temporarily stops charging in the next intermittent charging at another timing between the adjacent timings.

8. The charging control system according to claim 1, wherein

the battery parameter includes an internal resistance of the battery, and
for a case where a difference between the internal resistances of the battery at adjacent timings among a plurality of timings at which charging is temporarily stopped in the current intermittent charging is less than a third predetermined value, the charging control means continues next charging without temporarily stopping between the adjacent timings.

9. The charging control system according to claim 1, wherein the charging control means specifies a type of the battery on a basis of the battery parameter obtained in the current intermittent charging.

10. The charging control system according to claim 1, wherein the charging control means sets a timing at which charging is temporarily stopped in the next intermittent charging, on a basis of the battery parameter obtained in the current intermittent charging and a type of the battery.

11. The charging control system according to claim 1, wherein

in a case where the batteries are connected one-to-one to a plurality of chargers provided in a charging station, the charging control means intermittently performs charging by each of the chargers, and
the number of chargers, which have overlapping time zones for charging, among the plurality of chargers is smaller than a total number of the plurality of chargers.

12. The charging control system according to claim 1, wherein

in a case where the batteries are connected one-to-one to a plurality of chargers provided in a charging station, the charging control means intermittently performs charging by each of the chargers, and
when some of the plurality of chargers are performing charging, the charging control means performs a process of temporarily stopping charging by another charger.

13. The charging control system according to claim 12, wherein the charging control means performs the process such that a total value of use power of the plurality of chargers becomes equal to or less than a predetermined upper limit value.

14. A charging control method comprising

when a predetermined battery parameter of a battery is calculated on a basis of a state quantity of the battery when the battery is intermittently charged, performing next intermittent charging at a timing different from that of current intermittent charging, wherein
the timing is set on a basis of a charging rate, a voltage, or an internal resistance of the battery when charging is temporarily stopped in intermittent charging of the battery.

15. A program for causing a computer to execute the charging control method according to claim 14.

FIG. 1

## FIG. 2

1

CHARGING CONTROL MEANS

CHARGING CURRENT COMMAND VALUE →

SOC →

CHARGEABLE CURRENT ←

13

CHARGING CONTROL UNIT

→ CURRENT COMMAND

CHARGING STOP CONDITION

12

CHARGING STOP CONDITION DETERMINATION UNIT

BATTERY PARAMETER

11

BATTERY VOLTAGE →

CURRENT →

BATTERY STATE ESTIMATION UNIT

14

STORAGE UNIT 14a

PARAMETER TABLE

# FIG. 3

## FIG. 4

EP 4 489 260 A1

*FIG. 5*

# FIG. 6A

# FIG. 6B

## FIG. 7

EP 4 489 260 A1

# FIG. 8A

```
                    START

          ACQUIRE
IDENTIFICATION INFORMATION OF BATTERY          ~S101

          CURRENT CHARGING IS                    No
     FIRST INTERMITTENT CHARGING?  ───────────────────→  (A)
                                    S102
              Yes

SET TIMING TO TEMPORARILY STOP CHARGING         ~S103

           EXECUTE CHARGING                      ~S104

No              SOC HAS                          S105
←── REACHED PREDETERMINED THRESHOLD?

              Yes

       TEMPORARILY STOP CHARGING                 S106

     ACQUIRE EACH MEASUREMENT VALUE              S107

       CALCULATE BATTERY PARAMETER               S108

No        BATTERY IS FULLY CHARGED?              S109

              Yes

    COMPLETE FIRST INTERMITTENT CHARGING         S110

                    (B)
```

# FIG. 8B

```
                          (A)
                           │
                           ▼
┌────────────────────────────────────────────────┐
│   SET TIMING TO TEMPORARILY STOP CHARGING       │～S111
└────────────────────────────────────────────────┘
                           │
                           ▼
┌────────────────────────────────────────────────┐
│              EXECUTE CHARGING                    │～S112
└────────────────────────────────────────────────┘
                           │
                           ▼                        S113
            ╱───────────────────────────╲
    No   ╱      SOC HAS REACHED            ╲
  ◄─────    PREDETERMINED THRESHOLD?        ────
            ╲───────────────────────────╱
                      Yes │                  S114
                          ▼
┌────────────────────────────────────────────────┐
│        TEMPORARILY STOP CHARGING                 │
└────────────────────────────────────────────────┘
                          │                   S115
                          ▼
┌────────────────────────────────────────────────┐
│        ACQUIRE EACH MEASUREMENT VALUE            │
└────────────────────────────────────────────────┘
                          │                   S116
                          ▼
┌────────────────────────────────────────────────┐
│        CALCULATE BATTERY PARAMETER               │
└────────────────────────────────────────────────┘
                          │                   S117
                          ▼
            ╱───────────────────────────╲
    No   ╱                                ╲
  ◄─────      BATTERY IS FULLY CHARGED?    ────
            ╲───────────────────────────╱
                      Yes │                  S118
                          ▼
┌────────────────────────────────────────────────┐
│   COMPLETE SECOND INTERMITTENT CHARGING          │
└────────────────────────────────────────────────┘
                          │
                          ▼
                    (  END  )
```

(B)

# FIG. 9

EP 4 489 260 A1

FIG. 10

EP 4 489 260 A1

# FIG. 11

EP 4 489 260 A1

## FIG. 12A

## FIG. 12B

FIG. 13

FIG. 14

FIG. 15

FIG. 16

## FIG. 17

# FIG. 18

EP 4 489 260 A1

## FIG. 19

CC CHARGING

CV CHARGING

$I_p$

I1

I2

$I_{com}, I_{ch}$

CURRENT

0  t0  t1  t2  t3  TIME

$V_{Lim}$

VOLTAGE

0  t0  t1  t2  t3  TIME

EP 4 489 260 A1

# FIG. 20

FIG. 21

## INTERNATIONAL SEARCH REPORT

| International application No. |
| --- |
| **PCT/JP2022/046766** |

**A. CLASSIFICATION OF SUBJECT MATTER**

*H02J 7/04*(2006.01)i; *B60L 53/14*(2019.01)i; *B60L 53/62*(2019.01)i; *B60L 53/66*(2019.01)i; *B60L 58/12*(2019.01)i;
*G01R 31/3828*(2019.01)i; *G01R 31/3835*(2019.01)i; *G01R 31/387*(2019.01)i; *G01R 31/389*(2019.01)i;
*G01R 31/392*(2019.01)i; *H01M 10/44*(2006.01)i; *H01M 10/48*(2006.01)i
FI: H02J7/04 F; B60L53/14; B60L53/62; B60L53/66; B60L58/12; G01R31/3828; G01R31/3835; G01R31/387;
G01R31/389; G01R31/392; H01M10/44 Q; H01M10/48 P

According to International Patent Classification (IPC) or to both national classification and IPC

**B. FIELDS SEARCHED**

Minimum documentation searched (classification system followed by classification symbols)

H02J7/04; B60L53/14; B60L53/62; B60L53/66; B60L58/12; G01R31/3828; G01R31/3835; G01R31/387; G01R31/389;
G01R31/392; H01M10/44; H01M10/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-74501 A (HONDA MOTOR CO LTD) 16 May 2019 (2019-05-16)<br>entire text, all drawings | 1-15 |
| A | JP 2013-70534 A (HITACHI CONSTR MACH CO LTD) 18 April 2013 (2013-04-18)<br>entire text, all drawings | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 February 2023** | **07 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/046766**

| Patent document<br>cited in search report | | | Publication date<br>(day/month/year) | Patent family member(s) | | | Publication date<br>(day/month/year) |
|---|---|---|---|---|---|---|---|
| JP | 2019-74501 | A | 16 May 2019 | US | 2019/0113581 | A1 | |
| | | | | entire text, all drawings | | | |
| | | | | CN | 109683104 | A | |
| JP | 2013-70534 | A | 18 April 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011043460 A